# EUROPEAN PATENT SPECIFICATION

(11) **EP 1 262 701 B1**
(45) Date of publication and mention of the grant of the patent: **08.02.2006**
(21) Application number: 02076961.8
(22) Date of filing: 21.05.2002
(51) Int. Cl.: F16L 9/00

(54) **Pipe comprising more than one marking**
Rohr mit mehreren Markierungen
Tuyau comportant plus d'un marquant

(30) Priority: 28.05.2001 NL 1018157
(43) Date of publication of application: 04.12.2002
(73) Proprietor: Beuken, Leopold Maria Gerardus Adrianus, 4631 BE Hoogerheide (NL)
(72) Inventor: Beuken, Leopold Maria Gerardus Adrianus, 4631 BE Hoogerheide (NL)
(74) Representative: Eveleens Maarse, Pieter

(56) References cited:
- DE-U- 29 611 830
- DE-U- 29 911 625

## Description

The invention relates to a pipe arranged for transporting at least two different fluids, which pipe is provided with at least one mark extending in the longitudinal direction of the pipe, which functions to indicate the nature of the fluid for the transport of which the pipe is arranged.

Such pipes are generally known, see DE 296 11 830 U1, for example. They are for example used to indicate that a pipe is suitable for transporting water, for example by placing a blue mark, or for transporting gas, for example by placing a red mark.

There are types of pipe which a suitable for transporting different fluids. Copper pipes, for example, are suitable for transporting drinking water, washing water or gas. The term washing water as used herein is understood to mean a water quality which is less purified than drinking water and which is for example suitable for watering the garden, washing the car or flushing the toilet. Lately, this water quality has been used increasingly in order to effect a saving as regards the high costs of the preparation of drinking water.

When such pipes provided with a mark are used, a relevant type of pipe must be kept in stock for each of the aforesaid applications. This applies not only to the various types of marks, but also to the various pipe diameters, of course. This leads to a very large stock of pipes and to logistic problems.

DE 299 11 625 U1 discloses a pipe partly provided with a layer having a colour difference from the colour of the pipe wall. However a user cannot determine in a positive way the function of the pipe.

It is an object of the present invention to provided a pipe of which the actual function out of the plurality of possible functions can be positively determined.

This object is achieved in a pipe as claimed in claim 1 and a method as claimed in claim 16.

This aspect leads to a simplification as regards logistics; if a particular pipe quality can be used for the transport of drinking water and gas, for example, only one type of pipe needs to be kept in stock. Upon use of the pipe, one of the two marks may be removed or be moved to the rear side, making it "inactive", as it were. This can be achieved, for example, by positioning the pipe with the applicable mark on the front side, i.e. the side from which the pipe is approached, so that the mark in question will be the first mark that is detected when the pipe is approached at a later point in time.

It is noted that the invention not only relates to pipes made of one material, but also to pipes made of a composite material and to pipes which are made of a material composed of concentric layers.

The most effective effect is obtained if the marks are placed diametrically opposite each other, of course. After all, this makes it possible to place the mark that does not apply on the rear side as much as possible.

If the pipe is in principle suitable for the transport of a third fluid, it is also possible to provide the pipe with a third mark extending in the longitudinal direction of the pipe, which mark functions to indicate a third fluid for the transport of which the pipe is suitable.

In such a situation it is useful if the three marks are distributed at an angle of 120' relative to each other over the circumference of the pipe.

The invention also relates to a pipe according to any one of the preceding claims, which is installed in a building, in a plant or in the ground, which pipe is characterized in that the mark indicating the fluid for the transport of which the pipe has been installed is present on the side from which the pipe is approached.

This makes it possible to give a clear indication of the function of the pipe.

The invention furthermore relates to a method for installing said pipe in a building, in a plant or in the ground according to claims 16.

Finally, it is pointed out that the term fluid is understood to mean not only a gas or a liquid, but also electricity in all its forms, both for transporting energy and for transporting information.

The present invention will now be explained in more detail with reference to the accompanying drawings, in which:
Figure 1 is a perspective view of a part of a pipe according to the present invention;
Figure 2 is a sectional view of the pipe which is shown in Figure 1; and
Figure 3 is a partially cutaway perspective view of a pipe according to the invention, which is installed in a wall.

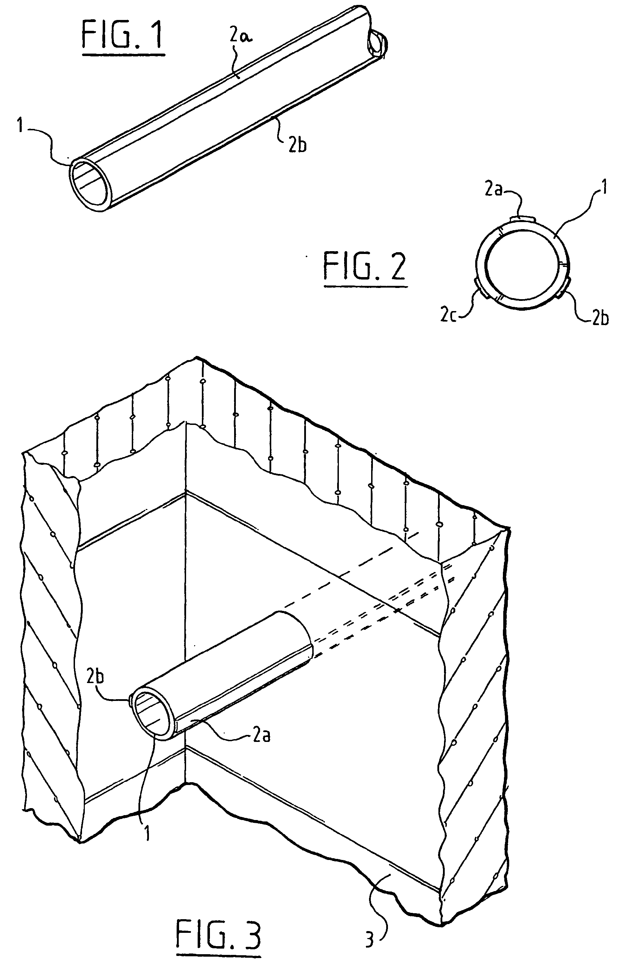

The pipe that is shown in Figure 1 is a copper pipe 1, which is known per se and which is used for transporting water or gas.

The pipe is provided with three marks, viz. mark 2a, mark 2b and a mark which is not shown in the drawing, which marks function to indicate the nature of the fluid to be transported. The three marks, which extend in the longitudinal direction, are distributed at an angle of 120' relative to each other over the circumference of the pipe. Mark 2a is suitable for indicating the transport of drinking water, mark 2b is suitable for indicating the transport of gas and mark 2c is suitable for indicating the transport of washing water.

The marks may be in the form of coloured strips printed on the copper pipe, text placed on the copper pipe, for example in the form of an ink jet print or a laser jet print, or in the form of reliefs that have been placed on the pipe, for example by means of a stamping operation.

The same configuration is shown in Figure 2. The marks 2a and 2c on the pipe that is shown in Figure 2 are plastic strips of a particular colour, which have been affixed to the pipe.

It will be apparent that numerous other types of marks can be used instead of the aforesaid examples of marks.

The essence of the invention is the fact that different marks are present on one pipe, and that the applicable mark for the pipe in question is placed on the side from which the pipe is approached.

The side from which the pipe is approached is understood to mean the side which, when the pipe is built into a wall, is located closest to the visible side of the wall, and which, when the pipe is installed in the ground, faces upwards.

All this is shown in Figure 3, in which the pipe 1 provided with two marks 2a, 2b is built into in a wall with its mark 2a facing to the front. It is also possible to fit the pipe on the wall.

## Claims

1. A pipe (1) suitable for transporting at least two different fluids, which pipe is provided with at least one mark (2a) extending in the longitudinal direction of the pipe, which functions to indicate the nature of the fluid for the transport of which the pipe is arranged, the pipe being provided at least with a second mark (2b) extending in the longitudinal direction of the pipe, which functions to indicate a second fluid for the transport of which the pipe is suitable, **characterized in that** both marks are provided on the pipe wall and are visually distinct from the contour of the pipe wall.

2. A pipe according to claim 1, **characterized in that** said marks are positioned diametrically opposite each other.

3. A pipe according to claim 1, **characterized in that** the pipe is provided with a third mark (2c) extending in the longitudinal direction of the pipe, which mark functions to indicate a third fluid for the transport of which the pipe is suitable.

4. A pipe according to claim 3, **characterized in that** the three marks are distributed at an angle of 120° relative to each other over the circumference of the pipe.

5. A pipe according to any one of the preceding claims, **characterized in that** the pipe is a copper pipe, and **in that** the pipe is provided with at least two marks selected from the collection of marks for gas, drinking water and washing water.

6. A pipe according to any one of the claims 1 - 4, **characterized in that** the pipe is a pipe of plastic material, and **in that** the pipe is provided with at least two marks selected from the collection of marks for electric energy, telephone and computer communications.

7. A pipe according to any one of the claims 1 - 4, **characterized in that** the pipe is a pipe of plastic material, and **in that** the pipe is provided with at least two marks selected from the collection of marks for sewage water and rain water.

8. Pipe according to any of the preceding claims, wherein the marks are removable.

9. Pipe according to any of the preceding claims, wherein marks are strips affixed to the pipe.

10. Pipe according to claim 9, wherein strips are of different colour.

11. Pipe according to any of the preceding claims, wherein strips are printed on the pipe.

12. Pipe according to any of the preceding claims, wherein marks are formed by reliefs placed on the pipe.

13. Pipe according to any of the preceding claims, wherein the pipe is a copper pipe provided with plasic strips of different colour.

14. Pipe according to any of the preceding claims,
wherein the marks are formed by text placed on the pipe.

15. A pipe arrangement in a building, in a plant or in the ground with a pipe according to any one of the preceding claims, **characterized in that** the mark indicating the fluid for the transport of which the pipe (1) has been installed is present on the side from which the pipe is approached.

16. A method for installing a pipe according to any one of the preceding claims 1-14 in a building, in a plant or in the ground, **characterized in that** the pipe is installed with the mark for the fluid for which the pipe is intended present on the side from which the pipe is approached.

## Patentansprüche

1. Rohr (1), geeignet zum Transport von wenigstens zwei unterschiedlichen Flüssigkeiten, wobei das Rohr mit wenigstens einer sich in Längsrichtung des Rohres erstreckenden Markierung (2a) versehen ist, um die Art der Flüssigkeit zu kennzeichnen, für deren Transport das Rohr angeordnet ist, und das Rohr mit wenigstens einer sich in Längsrichtung des Rohres erstreckenden zweiten Markierung (2b) zum Kennzeichnen einer zweiten Flüssigkeit, für deren Transport das Rohr geeignet ist, versehen ist,
**dadurch gekennzeichnet, dass**
beide Markierungen an der Rohrwand angebracht sind und sich visuell von der Kontur der Rohrwand unterscheiden.

2. Rohr gemäß Anspruch 1, **dadurch gekennzeichnet, dass** diese Markierungen diametral entgegengesetzt zueinander angeordnet sind.

3. Rohr gemäß Anspruch 1, **dadurch gekennzeichnet, dass** das Rohr mit einer sich in Längsrichtung des Rohres erstreckenden dritten Markierung (2c) versehen ist zum Kennzeichnen einer dritten Flüssigkeit, für deren Transport das Rohr geeignet ist.

4. Rohr gemäß Anspruch 3, **dadurch gekennzeichnet, dass** die drei Markierungen in einem Winkel von 120° relativ zueinander über den Umfang des Rohres verteilt sind.

5. Rohr gemäß einem der vorhergehenden Ansprüche, **dadurch gekennzeichnet, dass** das Rohr ein Kupferrohr ist, und dass das Rohr mit wenigstens zwei Markierungen versehen ist, ausgewählt aus der Gruppe von Markierungen für Gas, Trinkwasser und Waschwasser.

6. Rohr gemäß einem der Ansprüche 1 - 4, **dadurch gekennzeichnet, dass** das Rohr ein Rohr aus Plastikmaterial ist und dass das Rohr mit wenigstens zwei Markierungen versehen ist, ausgewählt aus der Gruppe von Markierungen für elektrische Energie, Telefon- und Computer-Kommunikation.

7. Rohr gemäß einem der Ansprüche 1 - 4, **dadurch gekennzeichnet, dass** das Rohr ein Rohr aus Plastikmaterial ist und dass das Rohr mit wenigstens zwei Markierungen versehen ist, ausgewählt aus der Gruppe von Markierungen für Abwasser und Regenwasser.

8. Rohr gemäß einem der vorhergehenden Ansprüche, **dadurch gekennzeichnet, dass** die Markierungen entfernbar sind.

9. Rohr gemäß einem der vorhergehenden Ansprüche, **dadurch gekennzeichnet, dass** die Markierungen am Rohr befestigte Bänder sind.

10. Rohr gemäß Anspruch 9, **dadurch gekennzeichnet, dass** die Bänder unterschiedliche Farben haben.

11. Rohr gemäß einem der vorhergehenden Ansprüche, **dadurch gekennzeichnet, dass** Bänder auf das Rohr gedruckt sind.

12. Rohr gemäß einem der vorhergehenden Ansprüche, **dadurch gekennzeichnet, dass** die Markierungen durch auf dem Rohr angebrachte Reliefe gebildet sind.

13. Rohr gemäß einem der vorhergehenden Ansprüche, **dadurch gekennzeichnet, dass** das Rohr ein mit Plastikbändern von unterschiedlicher Farbe versehenes Kupferrohr ist.

14. Rohr gemäß einem der vorhergehenden Ansprüche, **dadurch gekennzeichnet, dass** die Markierungen durch am Rohr angebrachter Text gebildet sind.

15. Rohranordnung in einem Gebäude, in einer Fabrik oder im Boden mit einem Rohr gemäß einem der vorhergehenden Ansprüche, **dadurch gekennzeichnet, dass** die Markierung, um die Flüssigkeit zu kennzeichnen, für deren Transport das Rohr (1) installiert wurde, an der Seite angebracht ist, von welcher man sich dem Rohr nähert.

16. Verfahren zur Installation eines Rohres gemäß einem der vorhergehenden Ansprüche 1 -14, in einem Gebäude, in einer Fabrik oder im Boden, **dadurch gekennzeichnet, dass** das Rohr mit der Markierung für die Flüssigkeit, für welche das Rohr vorgesehen ist, an der Seite angebracht ist, von welcher man sich dem Rohr nähert.

## Revendications

1. Tuyau (1) approprié pour transporter au moins deux fluides différents, lequel tuyau est prévu avec au moins une marque (2a) s'étendant dans la direction longitudinale du tuyau, qui fonctionne pour indiquer la nature du fluide pour le transport duquel le tuyau est agencé, le tuyau étant prévu au moins avec une seconde marque (2b) s'étendant dans la direction longitudinale du tuyau, qui fonctionne pour indiquer un second fluide pour le transport duquel le tuyau est approprié, **caractérisé en ce que** les deux marques sont prévues sur la paroi du tuyau et sont visuellement distinctes du contour de la paroi du tuyau.

2. Tuyau selon la revendication 1, **caractérisé en ce que** lesdites marques sont positionnées de manière diamétralement opposées l'une par rapport à l'autre.

3. Tuyau selon la revendication 1, **caractérisé en ce que** le tuyau est prévu avec une troisième marque (2c) s'étendant dans la direction longitudinale du tuyau, laquelle marque fonctionne pour indiquer un troisième fluide pour le transport duquel le tuyau est approprié.

4. Tuyau selon la revendication 3, **caractérisé en ce que** les trois marques sont réparties selon un angle de 120° les unes par rapport aux autres sur la circonférence du tuyau.

5. Tuyau selon l'une quelconque des revendications précédentes, **caractérisé en ce que** le tuyau est un tuyau en cuivre, et **en ce que** le tuyau est prévu avec au moins deux marques choisies dans le groupe comprenant les marques pour le gaz, l'eau potable et l'eau de lavage.

6. Tuyau selon l'une quelconque des revendications 1 à 4, **caractérisé en ce que** le tuyau est un tuyau en matière plastique, et **en ce que** le tuyau est prévu avec au moins deux marques choisies dans le groupe comprenant les marques pour l'énergie électrique, le téléphone et la télématique.

7. Tuyau selon l'une quelconque des revendications 1 à 4, **caractérisé en ce que** le tuyau est un tuyau en matière plastique et **en ce que** le tuyau est prévu avec au moins deux marques choisies dans le groupe comprenant les marques pour les eaux usées et l'eau de pluie.

8. Tuyau selon l'une quelconque des revendications précédentes, dans lequel les marques sont amovibles.

9. Tuyau selon l'une quelconque des revendications précédentes, dans lequel les marques sont des bandes fixées sur le tuyau.

10. Tuyau selon la revendication 9, dans lequel les bandes sont de différente couleur.

11. Tuyau selon l'une quelconque des revendications précédentes, dans lequel les bandes sont imprimées sur le tuyau.

12. Tuyau selon l'une quelconque des revendications précédentes, dans lequel les marques sont formées par des reliefs placés sur le tuyau.

13. Tuyau selon l'une quelconque des revendications précédentes, dans lequel le tuyau est un tuyau en cuivre prévu avec des bandes en plastique de couleur différente.

14. Tuyau selon l'une quelconque des revendications précédentes, dans lequel les marques sont formées par du texte placé sur le tuyau.

15. Agencement de tuyau dans un bâtiment, dans une usine ou dans le sol avec un tuyau selon l'une quelconque des revendications précédentes, **caractérisé en ce que** la marque indiquant le fluide pour le transport duquel le tuyau (1) a été installé, est présente sur le côté à partir duquel on s'approche du tuyau.

16. Procédé permettant d'installer un tuyau selon l'une quelconque des revendications 1 à 14, dans un bâtiment, dans une usine ou dans le sol, **caractérisé en ce que** le tuyau est installé avec la marque pour le fluide pour lequel le tuyau est prévu, présente sur le côté à partir duquel on s'approche du tuyau.
